# EUROPEAN PATENT APPLICATION

(11) **EP 2 336 880 A1**
(43) Date of publication of application: **22.06.2011**
(21) Application number: 11159884.3
(22) Date of filing: 25.08.2005
(51) Int. Cl.: G06F 9/44

(54) **Real-time data localization**

(30) Priority: 15.09.2004 US 941158
(62) Divisional of application: 05790711.5
(71) Applicant: APPLE INC., Cupertino, CA 95014 (US)
(72) Inventor: The designation of the inventor has not yet been filed
(74) Representative: Rooney, John-Paul

(57) **Abstract**

A method for performing a localization function, comprising: monitoring an input string, said input string being used to develop a product; and performing a substantially real-time localization of said product, performing said substantially real-time localization comprising performing a lookup of said input string to provide an alternative string based upon a previous localization associated with said alternative string. Corresponding apparatus and programs are taught.

## Description

### BACKGROUND OF THE INVENTION

### 1. FIELD OF THE INVENTION

This invention relates generally to sharing of an image, and, more particularly, to a method, apparatus, and system for performing a real-time or near real-time localization of data.

### 2. DESCRIPTION OF THE RELATED ART

There have been various advancements in the area of image capture technology for capturing images and processing them in a computer system. Image capture includes capturing of images processed by cameras and scanners. Generally, images are downloaded onto a computer, such as a Macintosh^{®} computer system, and a user may browse through the various images captured by the camera or the scanner. The state-of-the-art generally calls for downloading the data relating to the capturing of images from a scanner or a camera. This requires the user to have immediate access to the computer system coupled to the camera or scanner, which requires access to the computer system. Additionally, the state-of-the-art generally requires that the computer coupled to the camera or the scanner have sufficient available resources to perform the downloading of the images. Therefore, processing and sharing various images can be made difficult.

There have also been various advancements in communications between computer systems. Networks, such as the Internet, intranets, or other private or public networks, are ubiquitous. In fact, many computers are connected to one or more networks at the same time. For example, a business may have hundreds or even thousands of computers coupled to its own private network, which was, at least initially, used primarily for storage and exchange of computer files. At least some of these same business computers may also be coupled to the internet. Further, with the development of wireless devices, *ad hoc* networks may also be formed with properly configured portable devices. Even telephonic devices, such as cellular phones, pagers, and the like, may be coupled to one or more of these networks. Small businesses and homes are also often connected in similar arrangements.

Often, these computer systems execute various applications that are developed by many software developers. These computer systems may be utilized by different markets in different countries. The users of these computer systems in various countries have various customs and/or languages that are used to operate the computer systems. Often, software developers will develop a particular software product and this product may be localized to various different markets based upon different cultures and languages.

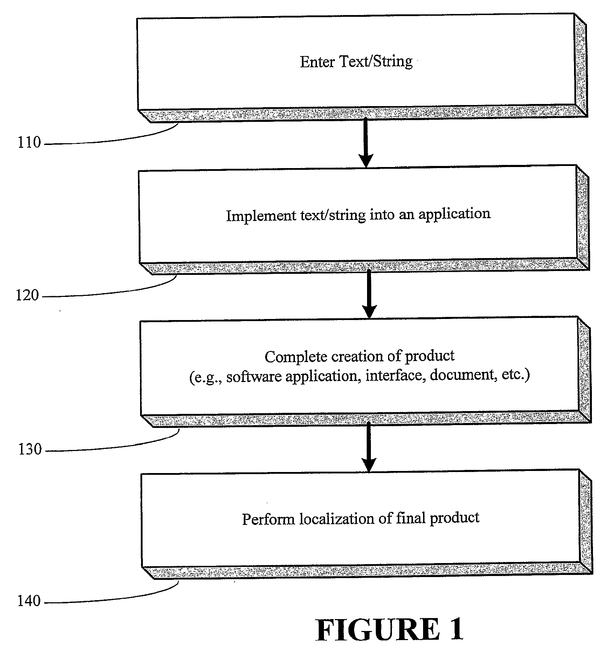

Turning now to Figure 1, a block diagram associated with a prior art method for developing a software product is illustrated. Typically, a software developer may enter a text, or string when developing software (block 110). This text or string may be entered in various high-level or low-level computer program languages, including Fortran C, C++, Pascal, object-oriented programming language, and/or various other software languages. A software developer may then cause the computer system to implement the text or string into a software product or application being developed (block 120). After various lines of texts and strings are entered and implemented, the creation of the software product, such as a software application, interface, document, etc., is completed (block 130). Upon completion of the product, the software may then undergo a localization process (block 140). The localization process is generally performed at the end of the entire production cycle of creating the software product. The localization process may include various translations and other changes that are performed on various windows or other interfaces associated with a particular software product. For example, the English string "Hello" may be translated into "Ola." Furthermore, traditions and customs of other cultures may be implemented in the various aspects of the software package. Therefore, text, strings, and/or graphics, may be altered to localize the product to a particular location.

One of the problems associated with the current methodology includes the fact that localization is performed near the end of the manufacturing cycle of producing the software product. One problem associated with this methodology is that the localization process is performed in a relatively small amount of time, as compared to the time period for the development of the software product. Therefore, it is inefficient, since a plurality of resources is put forth in this small amount of time. Additionally, the localization process may cause a delay in the release of a particular product. Delays in release of the product may cause loss of revenue and/or marketing problems.

Additionally, current methodology provides for a software developer to enter various terminologies without adequate language usage control. In other words, state-of-the-art technology allows for uncontrolled vocabulary when entering data (e.g., text, string, or graphics). Various problems may result from the usage of uncontrolled vocabulary. For example, inconsistent vocabulary may result from usage of uncontrolled vocabulary. This may lead to excessive translation requirements and/or translation of new text or strings. Processing of data, such as localization processes, may become more complicated and burdensome.

In order to alleviate some of these problems, developers have attempted to leverage existing translations of various phrases that may be stored in a database. This so called translation memory may be used to select various previously-translated phrases and implement them into the localization process. However, one problem associated with this solution includes the fact that various aspects of an interface of a software product may not have been translated yet. Therefore, a new software product may only be able to use a small amount of this translation using translation memory. Therefore, implementing the localization continues to remain a problem.

The present invention is directed to overcoming or at least reducing one or more of the problems set forth above.

### SUMMARY OF THE INVENTION

In one aspect of the present invention, a method is provided for performing a real-time or a near real-time localization of data. The method comprises monitoring an input string and comparing a semantic associated with the input string to a semantic associated with at least one stored string. The method further comprises providing the stored string as an alternative to the input string.

In another aspect of the present invention, a method is provided for performing a real-time or a near real-time localization of data. The method for performing a localization function comprises monitoring an input string that is used to develop a product. The method further comprises performing a substantially real-time localization of the product, which further comprises performing a lookup of the input string to provide an alternative string based upon a previous localization associated with the alternative string.

In another aspect of the present invention, a system is provided for performing a real-time or a near real-time localization of data. The system comprises a peripheral device and a computer device. The peripheral device is adapted to provide an input string. The computer device monitors the input string and compares a semantic associated with the input string to a semantic associated with at least one stored string. The computer device also provides an alternative to the input string.

In still yet another aspect of the present invention, a computer readable program storage device encoded with instructions is provided for performing a real-time or a near real-time localization of data. The computer readable program storage device encoded with instructions that, when executed by a computer, performs a method, which includes monitoring an input string and comparing a semantic associated with the input string to a semantic associated with at least one stored string. The computer readable program storage device encoded with instructions that, when executed by a computer, further provides the stored string as an alternative to the input string.

### BRIEF DESCRIPTION OF THE DRAWINGS

The invention may be understood by reference to the following description taken in conjunction with the accompanying drawings, in which like reference numerals identify like elements, and in which:
Figure 1 illustrates a flowchart depiction of a prior art methodology for performing a localization process.
Figure 2 illustrates a system comprising a server computer system and external devices, in accordance with one embodiment of the present invention;
Figure 3 illustrates a block diagram depiction of an exemplary computer system of Figure 2, in accordance with one embodiment of the present invention;
Figure 4 illustrates a block diagram depiction of a localization unit and lookup file of Figure 3, in accordance with one embodiment of the present invention;
Figure 5 illustrates a flowchart depiction of a method in accordance with one embodiment of the present invention; and
Figure 6 illustrates a more detailed flowchart depiction of performing a real-time localization process, in accordance with an alternative embodiment of the present invention.

While the invention is susceptible to various modifications and alternative forms, specific embodiments thereof have been shown by way of example in the drawings and are herein described in detail. It should be understood, however, that the description herein of specific embodiments is not intended to limit the invention to the particular forms disclosed, but on the contrary, the intention is to cover all modifications, equivalents, and alternatives falling within the spirit and scope of the invention as defined by the appended claims.

### DETAILED DESCRIPTION OF SPECIFIC EMBODIMENTS

Illustrative embodiments of the invention are described below. In the interest of clarity, not all features of an actual implementation are described in this specification. It will of course be appreciated that in the development of any such actual embodiment, numerous implementation-specific decisions must be made to achieve the developers' specific goals, such as compliance with system-related and business-related constraints, which will vary from one implementation to another. Moreover, it will be appreciated that such a development effort might be complex and time-consuming, but would nevertheless be a routine undertaking for those of ordinary skill in the art having the benefit of this disclosure.

Embodiments of the present invention provide for a real-time and/or a near real-time methodology of performing localization or partial localization of text, strings, and/or graphics being implemented during the development of a software product (e.g., an application, an interface, a document). Embodiments of the present invention call for examining whether a text, string, or graphic image that is entered by a software developer is substantially similar semantically, even if it is not syntactically identical. Based upon this comparison, a database that comprises previously translated similar terms may be accessed. These terms may then be offered as a substantially instantaneous alternative to the text, string, or graphic being entered, which may be accepted or rejected by the software developer. Therefore, a substantially real-time localization or partial localization may be performed on a product, as text is being entered, is made possible. In one embodiment, a small list of alternatives may be presented to the software developer who may then determine whether to substitute alternatives that are semantically identical, even though they may not be syntactically identical. Utilizing embodiments of the present invention, a more efficient localization may be performed, wherein at least a portion of the localization may be performed in real-time during the development of a software product.

Embodiments of the present invention may lead to more controlled language usage when entering data, *e.g.,* text, string, or graphics. A list of alternative(s) may be offered to a user when a new string, text, or graphics is entered. This list may be offered to the user on a real-time basis, or alternatively on a near real-time basis. This process may lead to more controlled vocabulary, which in turn may lead to more efficient localization processes. Additionally, utilizing embodiments of the present invention, flexibility in performing localization may be realized. For example, localization may be performed at a real-time basis, a near real-time basis, and/or in an offline or in a slower manner.

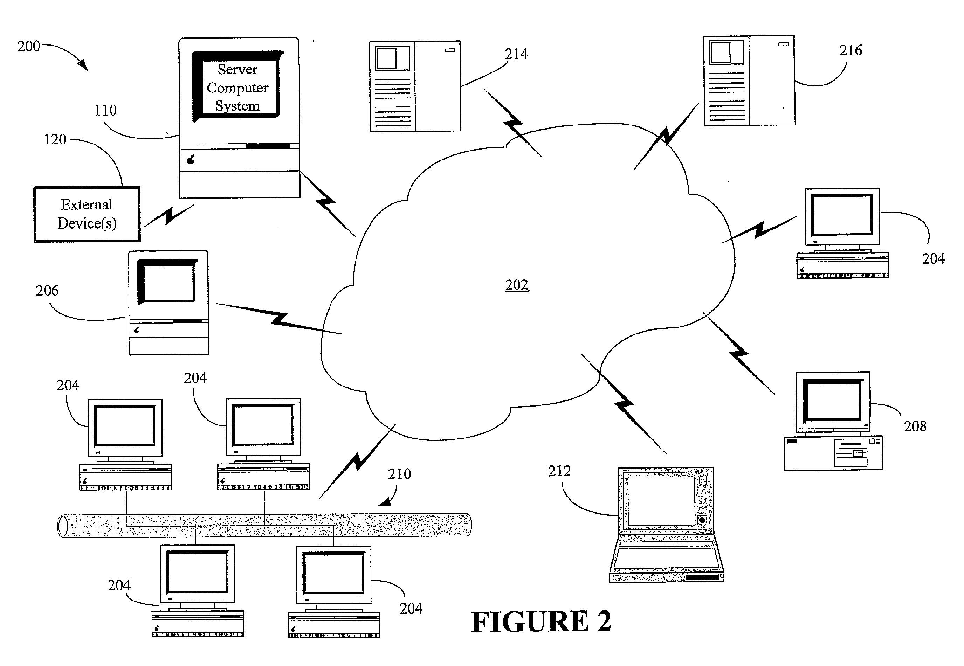

Turning now to Figure 2, a system 200 is depicted that illustrates remote computer systems accessing data or controlling the operation of the external devices 120 via the server computer system 110. The various components of the system 200 may be utilized to perform the substantially real-time localization provided herein. The system 200 includes a plurality of computing devices coupled together through one or more network connections that allows for electronic communications with the server computer system 110. For example, a plurality of devices may be coupled together via a private or public network, such as a local area network (LAN) or the Internet 202. In an alternative embodiment, the plurality of devices may be coupled together via an Intranet system. The actual connection between the devices and the Internet 202 may take on one or more of any of a variety of forms, such as a network interface card (NIC), a modem, a digital subscriber line (DSL), a cable modem, a wireless connection, and the like. The devices coupled to the Internet 202 may include, for example, desktop computers or servers, such as an Apple Macintosh^{®} 204, a classic Apple Mac^{®} 206, a Power Mac G4^{®}, a Power Mac G5^{®}, an iMac^{®}, an IBM compatible personal computer (PC) 208, and the like. Further, these desktop computers, such as the Apple Macintosh^{®} 204, may be coupled together via a smaller sub-LAN 210, with the sub-LAN 210 being coupled to the Internet 202. Portable devices, such as the Apple PowerBook^{®} or iBook^{®} 212, may also be coupled to the Internet 202, either directly or as part of the sub-LAN 210. Further, other consumer devices, such as cell phones, personal data assistants (PDAs), network appliances, and other embedded devices may be connected to the Internet 202 to employ aspects of the present invention.

While the invention has been illustrated herein as being useful in a network environment, it also has application in other connected environments. For example, two or more of the devices described above may be coupled together via device-to-device connections, such as by hard cabling, radio frequency signals (e.g., 802.11 (a), 802.11(b), 802.11 (g), Bluetooth, or the like), infrared coupling, telephone lines and modems, or the like. The present invention may have application in any environment where two or more users are interconnected and capable of communicating with one another.

Those skilled in the art will appreciate that network connections may include a variety of other equipment, such as routers, switches, telephone modems, wireless devices, cable modems, digital subscriber lines, and the like. This type of equipment is not illustrated or discussed in detail herein so as to avoid unnecessarily obfuscating the present invention. For purposes of understanding the present invention, it is sufficient to recognize that additional conventional equipment of this type may be useful in establishing and maintaining communications between the various users.

Various computer systems illustrated in Figure 2 may be used by software developers to develop many computer applications by entering text, strings, or graphics. The text, strings, or graphics, may be entered remotely or locally into any of the computer systems to develop software products along with the localization in real-time or substantially real-time partial or full localization embodiments of the present invention. Graphic images may include a variety of graphics and symbols.

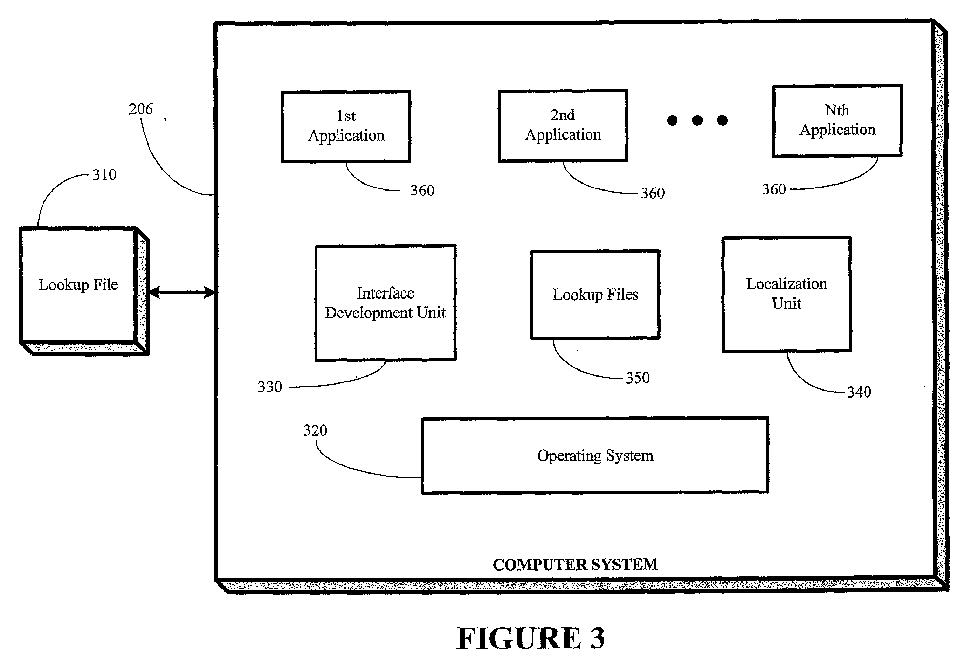

Turning now to Figure 3, an exemplary computer system utilized to perform the localization provided by embodiments of the present invention is illustrated. The illustration in Figure 3 is described in terms of an exemplary computer system 206; however, the various aspects of Figure 3 may be implemented into any computer system. A block diagram depiction of the computer system 206 in Figure 3 includes an operating system 320 capable of controlling the various operations performed by the computer system 206. The operating system 320 comprises various interfaces that are capable of respectively interfacing with the various applications, such as a 1^{st} through N^{th} application 360. The 1^{st} through N^{th} application 360 may comprise a variety of applications, such as iPhoto™, iChat™, various data manipulation applications, and the like.

The computer system 206 may also comprise an interface development unit 330 and a localization unit 340. A developer may enter various text, strings, or graphics, to develop an application, such as an interface for a particular product, using the interface development unit 330. The term "string" may include various combinations of text and/or various symbols. In one embodiment, the interface development unit 330 may be the Interface Builder™ product offered by Apple Computer, Inc. The interface development unit 330 may be used to enter various text, strings, or graphics, to create an interface, such as a Graphical User Interface (GUI) for a particular application. Other applications, such as a text document, or other software development applications may be used by a user/software developer to enter text, strings, or graphics, into the computer system 206. The localization unit 340 is capable of performing a real-time or a near real-time localization or partial localization of the text, string, or graphics, relating to the product being developed.

In one embodiment, the localization unit 340 may be incorporated or integrated into the interface development unit 330. In an alternative embodiment, the localization unit 340 may be separate from the interface development unit 330 and from the 1^{st} through N^{th} applications 360. The localization unit 340 is adapted to decipher the content of a text, string, or graphics entered into the computer system 206. The localization unit 340 is capable of performing a lookup of a particular input text, string, or graphic, being entered into the computer system 206. Based upon this lookup, the localization unit 340 may collect and offer one or more alternatives to the input string, which may be selectable by the user to perform a real-time or a near real-time localization of a product being developed. The lookup function may be performed by accessing data that may be stored into a lookup file 350 within the computer system 206. The lookup file 350 may comprise one or more databases that contain localization data and/or alternative strings. In an alternative embodiment, an external lookup file 310 may be accessed by the localization unit 340 to perform lookups.

In one embodiment, the localization unit 340 performs a translation based upon a selection by the user. The localization unit 340 may provide one or more options that may be used as a translated or localized text, string, or graphic based upon a text, string, or graphic, entered by a user. Alternatively, the localization unit 340 may provide alternative text, string, or graphics that have been previously localized, therefore a user may prefer this alternative over another text, string, or graphic for more efficient localization. Further, the localization may create a localization file that is updated with localized text, string, or graphics as the user is inputting new text, string, or graphics.

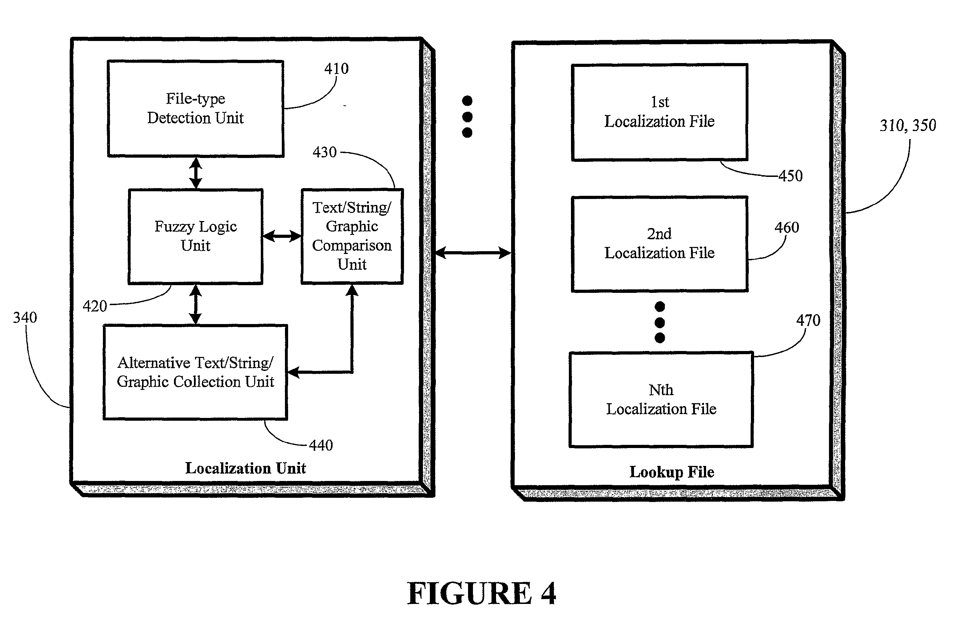

The localization unit 340 may select various stored alternatives based upon a characterization that a certain phrase may be substantially semantically identical, even if not syntactically identical. Of course, syntactically identical terms may immediately be looked up, translated, and offered as an alternative to the user. Using the localization unit 340, a real-time or near real-time localization of various products being developed using the computer system 206 may be realized. Therefore, at the completion of the product, a substantially complete localization may already be available with little or no additional processing for localization. A more detailed description of the localization unit 340 is provided in Figure 4 and accompanying description below.

Turning now to Figure 4, a block diagram depiction of the localization unit 340 and a block diagram depiction of the lookup file 310 are illustrated, in accordance with an embodiment of the present invention. The localization unit 340 may comprise a file type detection unit 410, a fuzzy logic unit 420, a text/string/graphic comparison unit 430, and an alternative string/text/graphic collection unit 440. Based upon the type of detection by the file type detection unit 410 and the type of localization desired, a particular set of files or databases may be searched within a particular localization file, *i.e.,* a 1^{st}, 2^{nd} through N^{th} localization files 450, 460, 470, for comparison and analysis. One or more blocks illustrated in Figure 4 maybe a hardware unit, a software unit, a firmware unit, and/or a combination thereof.

The lookup file 310, 350 may comprise various localization files that may be specific to different locals, such as a localization file for a Spanish audience, a localization file for a European audience, a localization file for a Far East audience, etc. Therefore, the tables in the lookup file 310, 350 comprises a first localization file 450, a second localization file 460, through an N^{th} localization file 470. These localization files 450, 460, 470 may be consulted by the localization unit 340 in order to perform the real-time/near real-time localization process described herein.

The file type detection unit 410 may comprise various logic or software commands to detect a particular file type being developed by the user. For example, the file type detection unit 410 may detect that a C file, a C++ file, a Java file, or a graphical user interface (GUI) is being developed for a music recording application. Based upon the file type detected by the file type detection unit 410, a fuzzy logic unit 420 may search for similarities with previously stored semantics relating to various strings or graphics. The fuzzy logic unit 420 may then prompt the collection of such strings for providing alternatives for substantially real-time localization of a particular product being developed by the user/developer. The fuzzy logic unit 420 may be representative of various types of hardware, software, or firmware logic that may be implemented by those skilled in the art having benefit of the present disclosure and remain within the spirit and scope of the present invention. The text/string/graphic comparison unit 430 may perform a comparison of the text, string, or graphic, being entered to determine whether the text, string, or graphic, being analyzed is semantically virtually identical to a previously stored and translated set of text, string, or graphic.

The text/string/graphic comparison unit 430 then retrieves various text, string, or graphic, data that may be syntactically identical or, if not syntactically identical, substantially semantically identical, from one of the selected localization files 450, 460, 470. Based upon the results from the text/string/graphic comparison unit 430 that particular strings, text, or graphical representations are substantially similar, even only if semantically such, the fuzzy logic unit 420 causes the alternate string/text/graphic collection unit 440 to retrieve the text, strings, or graphics. The alternative string/text/graphic collection unit 440 accesses databases that may be stored in the 1^{st} through N^{th} localization files 450, 460, 470 to provide a list of choices that a user may select. Therefore, the user may change the originally inputted text, string, or graphic, based upon the return from the alternative string/text/graphic collection unit 440 to match more closely a previously localized text, string, or graphic. In an alternative embodiment, the user may select one of the offered localization options for localization causing a real-time or near real-time localization file 450, 460, 470 to constantly be created and updated. Therefore, utilizing the localization unit 340, a localization file 450, 460, 470 is created and updated as text, strings, or graphics are being entered into a particular file by a user. Therefore, upon completion of the process, a nearly completed or substantially completed localization file 450, 460, 470 for a particular software or document is available.

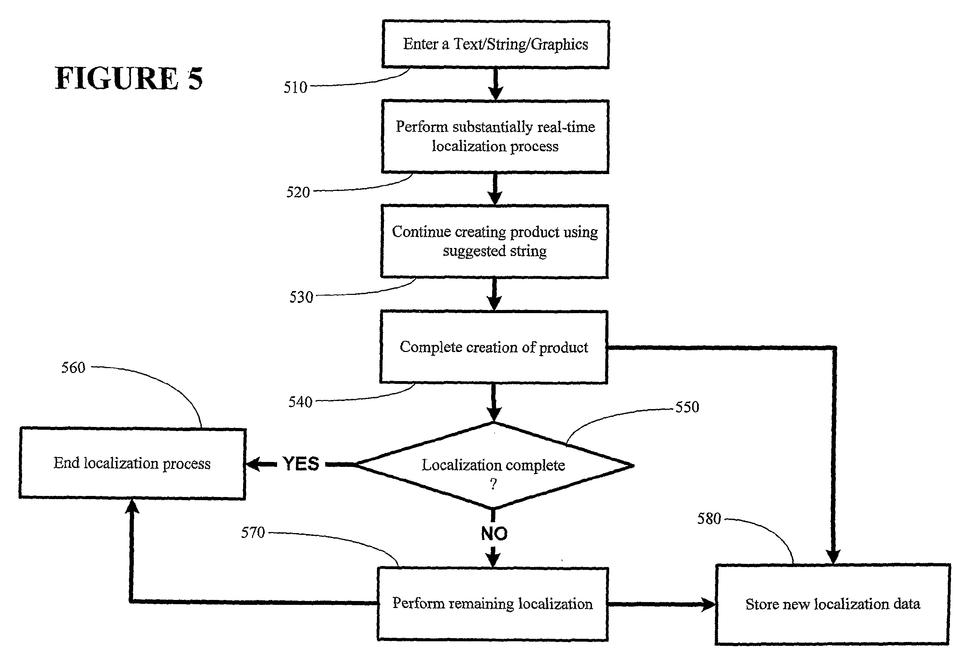

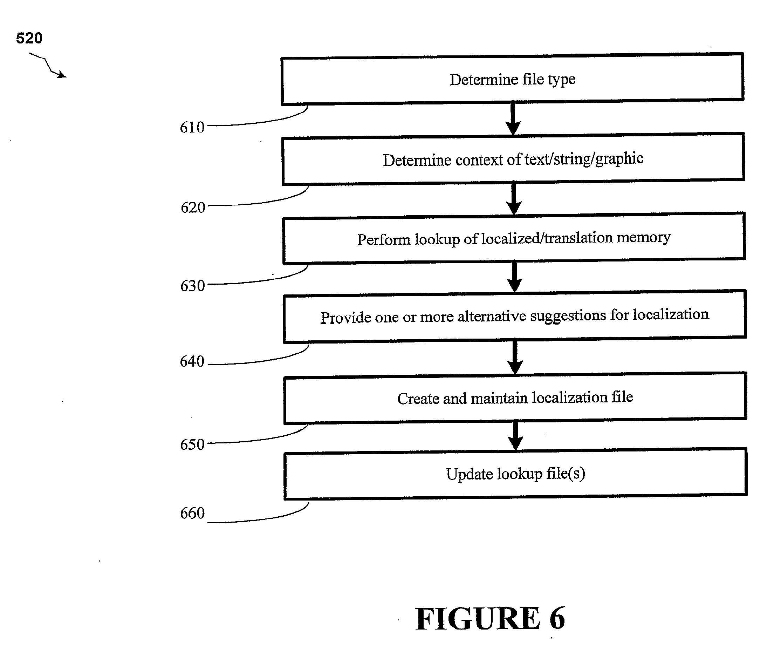

Turning now to Figure 5, a flowchart depiction of a method in accordance with embodiments of the present invention is illustrated. A developer may enter a text, string, or graphic, into the computer system 206 to develop an application document, or an interface for a particular application, such as a graphical user interface (block 510). Based upon the text, string, or graphic, being entered, the computer system 206, using the localization unit 340, may perform a substantially real-time localization process 520. The real-time localization process described in the present disclosure may also include variations of real-time localizations, such as near real-time localization, substantially real-time localization, or actual real-time localization. The real-time localization process provides for translating or modifying the text, string, or graphic, being entered by the user as described in block 520 in a near real-time or real-time fashion. A more detailed illustration and description of the real-time localization process of block 520 is provided in Figure 6 and accompanying description below.

Based upon the real-time localization process, a concurrent file may be generated to develop the localized version of the document, applications, interface, or other applications being developed by the user. For example, the user may enter text, strings, or graphics, in English, wherein a localization file being processed by the computer system 206 may provide for a European localization of the English text, string, or graphic, being entered into a particular application. Based upon the real-time localization process results, the computer system 206 may continue with the creation of the software product utilizing the suggested text, string, or graphic, to provide for making the localization or translation process more efficient.

Alternatively, a localization file 450, 460, 470 may be maintained based upon the feedback of the users. After creating the software product using the suggestions provided by the localization process, the software product may be completed (block 540). Therefore, utilizing the localization process, a software application or document may be more efficiently completed. Therefore, a localization version of the software product being developed is now available, which may or may not be complete. A determination is made whether the real-time localization process results in a completed localization of the software product being developed (block 550). If the localization is complete, the localization process is terminated (block 560). If the localization process is not yet complete and other text, string, or graphics, need to be localized, supplemental localization processes are performed to perform the full localization. This may mean that several text, string, or graphics, may not have been previously stored in databases or had not previously been localized. Therefore, these text, string, or graphics, may now be localized. The additional localization data may then be stored into various tables or databases in the lookup files 310, 350, which allow for further efficiencies in future localization processes (block 580). The computer system 206 may then end the localization process as illustrated in Figure 5.

Turning now to Figure 6, a more detailed flowchart depiction and description of the real-time localization process described in block 520 of Figure 5, in accordance with one embodiment of the present invention is illustrated. Based upon text, strings, or graphics, entered by the user, the localization unit 340 may determine the file type of the file or application being developed by the user (block 610). For example, the localization unit 340 may determine whether the file being developed is a C file, a C++ file, a Java file, a object-oriented programming file, a graphical user interface, a word processing document, or the like. Based upon the file type, the localization unit 340 may determine a context relating to the text, string, or graphic, being entered by the user (block 620). The context of the text, string, or graphic, may provide an indication to determine whether a text, string, or graphic, is semantically equivalent to a particular localized or translated text, string, or graphic, available in the lookup files 310, 350.

Therefore, in a real-time or a near real-time process, the localization unit 340 may perform a lookup of the localized or translated equivalent text, string, or graphic, in memory, such as in a lookup file 310, 350 (block 630). This lookup process may include various aspects, such as determining whether an exact match in the lookup file 310, 350 is found, an equivalent match within the context is found, or a partial match is found in the lookup file 310, 350.

Based upon the lookup results, which may include comparing the entered text, string, or graphic, to various matches of exact matches, context matches, or partial matches, a list of alternative selections for localization that may have one or more alternatives may be provided to the user (block 640). In one embodiment, the selection may be performed automatically by the computer system 206. In another embodiment, the user selects one of the suggestions. Based upon the suggestions and the selections of one of the suggestions for localization, a localization file 340 may be created, maintained, and/or updated in a real-time or near real-time fashion (block 650). Additionally, the newly selected or translated text, string, or graphic, may be used to update the lookup files 310, 350 for adding other information regarding context or partial matches (block 660). Therefore, the lookup files 310, 350 may expand as more data is provided based upon the user's selection. Therefore, a substantially real-time or near real-time localization file is provided based upon entry from the developer.

Utilizing embodiments of the present invention, a substantially real-time or near real-time localization of a particular software product may be performed. A substantially real-time lookup function may be performed to determine whether an entered text, string, or graphic image is substantially equivalent to the stored and previously translated text, string, or graphic, and provide one or more closely related alternatives to the user/developer. Based on the selection by the user and/or automated selections performed by a computer system 206, a new localized file may be generated. Therefore, upon the completion of the development of a particular software product, a completed, substantially completed, or partially localized file is now available. Additionally, newer localization or alternative text, string, or graphic, entry may have been performed by the user so that more efficient localizations have taken place. Therefore, embodiments of the present invention provide for a more efficient localization process that may be partially performed during the development of the process for more efficient completion of a localization of a particular software product. Furthermore, utilizing embodiments of the present invention, a more controlled vocabulary usage is made possible. This provides for more efficient use of existing translations. Controlled vocabulary usage may also provide for greater ability to predict the amount of localization that may be needed. Additionally, flexibility in performing localization is provided, such that localization may be performed on a real-time basis, a near real-time basis, and/or in a delayed offline manner. Therefore, various advantages, such as reduction in cost of localization of processes, faster finalization of a software product, more efficient or early release of a particular software product, and the like may be realized.

The particular embodiments disclosed above are illustrative only, as the invention may be modified and practiced in different but equivalent manners apparent to those skilled in the art having the benefit of the teachings herein. Furthermore, no limitations are intended to the details of construction or design herein shown, other than as described in the claims below. It is therefore evident that the particular embodiments disclosed above may be altered or modified and all such variations are considered within the scope and spirit of the invention. Accordingly, the protection sought herein is as set forth in the claims below.

Before setting out the claims however, there is first provided a set of clauses indicating some salient features of the present invention:
*1. A method, comprising: monitoring an input string; comparing a semantic associated with said input string to a semantic associated with at least one stored string, find providing said stored string as an alternative to said input string.*
*2. The method of clause 1, wherein at least one of said monitoring said input string, comparing said semantic associated with said input string to said semantic associated with said stored string, and providing said stored string as an alternative further comprises performing said monitoring, comparing, and providing in a substantially real-time manner.*
*3. The method of clause 1, wherein monitoring said input string further comprises deciphering the content associated with said input string to determine said semantic associated with said input string.*
*4. The method of clause 3, wherein monitoring said input string further comprises:*
   *determining a file type relating to said input string; and determining a context*
   *associated with said input string based upon said file type.*
*5. The method of clause 4, wherein comparing said semantic associated with said input string to said semantic associated with said stored string further comprises using at least one of said content and said context associated with said input string to compare said semantic associated with said input string with said semantic associated with said stored string.*
*6. The method of clause 1. wherein providing said stored string as an alternative to said input string further comprises allowing a user to select said alternative string as a substitute for said input string.*
*7. The method of clause 6, wherein providing said stored string as an alternative to said input string further comprises allowing a user to select said alternative string to create a localization file, said alternative string being included in said localization file to generate a localized version of a product associated with said input string.*
*8. The method of clause 6, wherein providing said stored string as an alternative to said input string further comprises providing a plurality of alternatives to said input string.*
*9. 7he method of clause 1, wherein providing said stored string as an alternatives to said input string further comprises providing previously localized stored string.*
*10. The method of clause 1, wherein providing said stored string as an alternative to said input string further comprises providing said stored string corresponding to a previously localized string.*
*11. The method of clause 1, further comprising: monitoring an input graphics portion; comparing said input graphics portion with at least one stored graphics portion; and providing said stored graphics portion as an alternative to said input graphics portion.*
*12. The method of clause 1, wherein providing said stored graphics portion as an alternative to said input graphics portion further comprises providing said stored graphics portion associated with a previously localized graphics portion.*
*13. A method for preforming a localization function, comprising: monitoring an input string, said input string being used to develop a product, and performing a substantially real-time localization of said product, preforming said substantially real-time localization comprising performing a lookup of said input string to provide an alternative string based upon a previous localization associated with said alternative string.*
*14. The method of clause 13, wherein performing said substantially real-time localization of said product further comprises: deciphering a content associated with said input string to determine a semantic associated with said input string; determining a file type relating to said input string; and determining a context associated with said input string based upon said file type.*
*15. The method of clause 14, wherein performing said lookup of said input string to provide an alternative string further comprises using at least one of said content and said context associated with said input string to compare said semantic associated with said input string with said semantic associated with said stored string.*
*16. The method of clause 13, performing said substantially real-time localization further comprises allowing a user to select said alternative string to create a localization file, said alternative string being included in said localization file to generate a localized version of a product associated with said input string.*
*17. The method of clause 16, wherein performing a substantially real-time localization of said product further comprises providing previously localized stored string.*
*18. The method of clause 16, wherein performing said substantially real-time localization of said product further comprises providing said stored string corresponding to a previously localized string.*
*19. The method of clause 1, wherein providing said stored string as an alternative to said input string further comprises providing a controlled vocabulary usage.*
*20. A method, comprising: monitoring an input graphic image; comparing a characteristic associated with said input string to a corresponding characteristic associated with at least one graphic image; and providing said stored graphic images as an alternative to said input graphic image.*
*21. A system, comprising: a peripheral device adapted to provide an input string; and a computer device to monitor said input string and compare a semantic associated with said input string to a semantic associated with at least one stored string, said computer device to also provide an alternative to said input string.*
*22. The system of clause 21, wherein said computer system is coupled to a network system.*
*23. The system of clause 22, wherein said network system is a server*/*client system.*
*24. The system of clause 23, wherein said computer device comprising: an operating system to control an operation of said computer device; a lookup file comprising a plurality of localized strings, and a localization unit to select at least one of said localized strings from said lookup file based upon comparing said semantic associated with said input string to said semantic associated with said stored string.*
*25. The system of clause 24, wherein said localization unit further comprising: a file type detection unit to detect a file type associated with said input string; a text*/*string*/*graphic comparison unit to compare said semantic associated with said input string to said semantic associated with said stored string; and an alternative text*/*string*/*graphic collection unit to provide said alternative to said input string.*
26. *The system of clause 25, wherein said localization unit further comprising a fuzzy logic unit to control an operation of at least one of said file type detection unit, said text*/*string*/*graphic comparison unit, and said alternative text*/*string*/*graphic collection unit.*
*27. The system of clause 25, wherein at least one of said fuzzy logic unit, said file type detection unit, said text*/*string*/*graphic comparison unit, and said alternative text*/*string*/*graphic collection unit is a software unit.*
*28. The system of clause 25, wherein at least one of said fuzzy logic unit, said file type detection unit, said text*/*string*/*graphic comparison unit, and said alternative text*/*string*/*graphic collection unit is a hardware unit.*
*29. The system of clause 25 wherein at least one of said fuzzy logic unit, said file type detection unit, said text*/*string*/*graphic comparison unit, and said alternative text*/*string*/*graphic collection unit if a firmware unit.*
*30. The system of clause 24, wherein said lookup file if a database that comprises at least one localization file comprising a plurality of localized strings.*
*31. The system of clause 24, wherein said localization, unit is capable of deciphering the content associated with said input string to determine said semantic associated with said input string, determining said file type relating to said input string, and determining a context associated with said input string based upon said file type.*
*32. The system of clause 31, wherein said localization unit is capable of using at least one of said content and said context associated with said input string to compare said semantic associated with said input string with said semantic associated with said stored string.*
*33. The system of clause 31, wherein said localization unit is capable of allowing a user to select said alternative string to create a localization file, said alternative string being included in said localization file to generate a localized version of a product associated with said input string.*
*34. The system of clause 31, wherein said localization unit is capable of performing a substantially real-time localization of said product further comprises providing a previously localized stored string.*
*35. The system of clause 31, wherein said localization unit is capable of performing said substantially real.-time localization of said product further comprises providing said stored string corresponding to a previously localized string.*
*36. An apparatus, comprising: means for monitoring an input string; means for comparing a semantic associated with said input string to a semantic associated with at least one stored string, and means for providing said stored string as an alternative to said input string.*
*37. A computer readable program storage device encoded with instructions that, when executed by a computer, performs a method, comprising: monitoring an input string; comparing a semantic associated with said input string to a semantic associated with at least one stored string, and providing said stored string as an alternative to said input string.*
*38. The computer readable program storage device encoded with instructions that, when executed by a computer, performs the method of clause 37, wherein at least one of said monitoring said input string, comparing said semantic associated with said input string to said semantic associated with said stored string, and providing said stored string as an alternative further comprises performing said monitoring, comparing, and providing in a substantially real-time manner.*
*39. The computer readable program storage device encoded with instructions that, when executed by a computer, performs the method of clause 37, wherein monitoring said input string further comprises deciphering a content associated with said input string to determine said semantic associated with said input string.*
*40. The computer readable program storage device encoded with instructions that, when executed by a computer, performs the method of clause 39*, *wherein monitoring said input string further comprises: determining a file type relating to said input string, and determining a context associated with said input string based upon said file type;*
*41. The computer readable program storage device encoded with instructions that, when executed by a computer, performs the method of clause 40, wherein compacting said semantic associated with said input string to said semantic associated with said stored string further comprises using at least one of said content and said context associated with said input string to compare said semantic associated with said input string with said semantic associated with said stored string.*
*42. 7he computer readable program storage device encoded with instructions that, when executed by a computer, performs the method of clause 37, wherein providing said stored string as an alternative to said input string further comprises allowing a user to select said alternative string as a substitute for said input string.*
*43. The computer readable program storage device encoded with instructions that, when executed by a computer, performs the method of clause 42, wherein providing said stored string as an alternative to said input string further comprises allowing a user to select said alternatives string to create a localization file, said alternative string being included in said localization file to generate a localized version of a products associated with said input string.*
*44. The computer readable program storage device encoded with instructions that, when executed by a computer, performs the method of clause 43, wherein providing said stored string as an alternative to said input string further comprises providing a plurality of alternatives to said input string.*
*45. The computer readable program storage device encoded with instructions that, when executed by a computer, performs the method of clause 37, wherein providing said stored string as an alternative to said input string further comprises providing a previously localized stored string.*
*46. The computer readable program storage device encoded with instructions that, when executed by a computer, performs the method of clause 37*, *wherein providing said stored string as an alternative to said input string further comprises providing said stored string corresponding to a previously localized string.*
*47. The computer readable program storage device encoded with instructions that, when executed by a computer, performs the method of clause 37, further comprising:*
   *monitoring an input graphics portion; comparing said input graphics portion with at least one stored graphics portion, and providing said stored graphics portion as an alternative to said input graphics portion.*
*48. The computer readable program storage device encoded with instructions that, when executed by a computer, performs the method of clause 37, wherein providing said stored graphics portion as an alternative to said input graphics portion further comprises providing said stored graphics portion associated with a previously localized graphics portion.*

## Claims

1. A method for performing a localization function, comprising: monitoring an input string, said input string being used to develop a product; and performing a substantially real-time localization of said product, performing said substantially real-time localization comprising performing a lookup of said input string to provide an alternative string based upon a previous localization associated with said alternative string.

2. The method of claim 1, wherein performing said substantially real-time localization of said product further comprises: deciphering a content associated with said input string to determine a semantic associated with said input string; determining a file type relating to said input string; and determining a context associated with said input string based upon said file type.

3. The method of claim 2, wherein performing said lookup of said input string to provide an alternative string comprises using at least one of said content and said context associated with said input string to compare said semantic associated with said input string with said semantic associate with said stored string.

4. The method of claim 1, wherein performing said substantially real-time localization further comprises allowing a user to select said alternative string to create a localization file, said alternative string being included in said localization file to generate a localized version of a product associated with said input string.

5. The method of claim 4, wherein performing a substantially real-time localization of said product further comprises providing a previously localized stored string.

6. The method of claim 4, wherein performing said substantially real-time localization of said product further comprises providing said stored string corresponding to a previously localized string.

7. A program that, when executed by a computer, performs a method according to any one of claims 1 to 6.

8. Apparatus for performing a localization function, the apparatus comprising: means for monitoring an input string, said input string being used to develop a product; and means for performing a substantially real-time localization of said product, wherein the means for performing said substantially real-time localization comprises means for performing a lookup of said input string to provide an alternative string based upon a previous localization associated with said alternative string.

9. The apparatus of claim. 8, wherein the means for performing said substantially real-time localization further comprises: means for deciphering a content associated with said input string to determine a semantic associated with said input string; means for determining a file type relating to said input string; and means for determining a context associated with said input string based upon said file type.

10. The apparatus of claim 9, wherein the means for performing said lookup comprises using at least one of said content and said context associated with said input string to compare said semantic associated with said input string with said semantic associated with said stored string.

11. The apparatus of claim 8, wherein the means for performing said substantially real-time localization further comprises means for allowing a user to select said alternative string to create a localization file and to include, said alternative string in said localization file to generate a localized version of a product associated with said input string.

12. The apparatus of claim 11, wherein the means for performing a substantially real-time localization further comprises means for providing a previously localized stored string.

13. The apparatus of claim 11, wherein the means for performing said substantially real-time localization of said product further comprises means for providing said stored string corresponding to a previously localized string.
